# EUROPEAN PATENT APPLICATION

(11) **EP 4 624 847 A1**
(43) Date of publication of application: **01.10.2025**
(21) Application number: 24190236.0
(22) Date of filing: 23.07.2024
(51) Int. Cl.: F27B 9/10, C21D 1/34, C21D 1/767, C21D 9/00, F16D 69/00, F16D 69/02, F26B 15/14, F27B 9/30, F27B 9/36, F27D 17/00, F27D 17/10

(54) **APPARATUS FOR THE HEAT TREATMENT OF ARTICLES**

(30) Priority: 25.03.2024 IT 202400006619
(71) Applicant: IMF ENGINEERING S.r.l., 20016 Pero (Milano) (IT)
(72) Inventor: MAROTTI, Armando, 20124 Milano (IT); ZANOTTI, Massimiliano, 28069 Trecate (Novara) (IT); BELLU, Stefano, 22070 Limido Comasco (Como) (IT)
(74) Representative: Rapisardi, Mariacristina

(57) **Abstract**

Apparatus (1) for the heat treatment of articles, comprising a longitudinal casing (2), a convection tunnel furnace (3) positioned longitudinally within the casing (2) comprising a circuit for the production and forced circulation of hot air through said furnace (3), a plurality of stackable trays (4) where the articles can be housed, a conveyor (50) configured to transport at least one row of stacks of the stackable trays (4) through the furnace (3), a first thermal stabilization chamber (51) for the stacks of trays (4) with the articles to be treated communicating with an entrance door (31) of the furnace (3) and a second thermal stabilization chamber (52) for the stacks of trays (4) with the treated articles communicating with an exit door (32) of the furnace (3), comprising means for forced air suction (200) at least from the second thermal stabilization chamber (52) and means for recovery and introduction (210) of the suctioned air inside the furnace (3).

## Description

The present invention relates to an apparatus for the heat treatment of articles.

Apparatuses for the heat treatment of articles, typically small-sized semi-finished products coming from previous mechanical processing stations, have long been available on the market.

After these stations, heat treatments are necessary to complete and consolidate the specific properties and characteristics required by the finished product.

It is known that apparatuses for the heat treatment of articles must ensure a controlled and homogeneous distribution of temperatures across all the articles being treated.

EP 3303961B1 teaches an apparatus for the hot air heat treatment of friction elements, particularly braking elements such as brake pads.

EP 23189373 illustrates an apparatus for the heat treatment of articles, typically small-sized semi-finished products.

Such apparatuses may be ineffective, as the forced circulation of heated air does not always ensure a homogeneous distribution of temperature in the heating fluid and, consequently, the heat transferred to articles in process.

They may also be inefficient because the forced air circuit is particularly tortuous and requires significant energy expenditure to be maintained.

It is also known that such apparatuses are subject to significant heat losses at the openings of the conveyor belt passages where the articles enter, advance, and exit the furnace step by step.

It is also known that it is advisable to maintain the inside of the furnace under slight overpressure compared to the outside to prevent cooler ambient air from entering the hot chamber of the furnace through the various unsealed connections of the structural elements.

Therefore, there is a need to improve the structure of an apparatus for the heat treatment of articles of the known type.

The technical task proposed by the present invention is to create an apparatus for the heat treatment of articles that eliminates the technical inconveniences complained of in the prior art.

Within the scope of this technical task, one aim of the invention is to create an apparatus for the hot air heat treatment of articles that ensures correct homogenization of the heating fluid and consistent heat transfer to the articles in process.

Another aim of the present invention is to create an apparatus for the hot air heat treatment of articles that is simple and has low energy consumption.

The technical task, as well as these and other aims, are achieved according to the present invention by creating an apparatus for the heat treatment of articles, comprising a longitudinal casing, a convection tunnel furnace positioned longitudinally in the casing, comprising a circuit for producing and forcibly circulating hot air through said furnace, a plurality of stackable trays where said articles can be housed, a conveyor configured to transport at least one row of stacks of said stackable trays through said furnace, a first thermal stabilization chamber for said stacks of trays with the articles to be treated communicating with an entrance door of said furnace, and a second thermal stabilization chamber for said stacks of trays with the treated articles communicating with an exit door of said furnace, characterized by the fact that it comprises means for forced air suction from at least said second thermal stabilization chamber and means for recovering and introducing said suctioned air inside said furnace.

In one embodiment, the forced air suction means comprise at least one hood from the second thermal stabilization chamber, at least one first centrifugal fan, and a first suction duct connecting the hood of the second thermal stabilization chamber to the suction of the first centrifugal fan.

In one embodiment, the means for recovering and introducing the suctioned air inside the furnace comprise at least one first delivery duct exiting the first centrifugal fan and at least one second delivery duct connecting the first delivery duct to a compensation fan interposed and connected between the second delivery duct and the top of the furnace.

In one embodiment, the second delivery duct and the compensation fan are sized and activated to maintain the furnace in overpressure during operation.

In one embodiment, the conveyor is configured to transport at least one row of stacks of stackable trays through the furnace with step-by-step advancement.

In one embodiment, the articles are brake pads.

In another embodiment, the articles are friction materials.

Other features of the present invention are further defined in the subsequent claims.

Further features and advantages of the invention will become more apparent from the description of a preferred but not exclusive embodiment of an apparatus for the heat treatment of articles according to the invention, illustrated by way of example and not limitation in the accompanying drawings, in which:

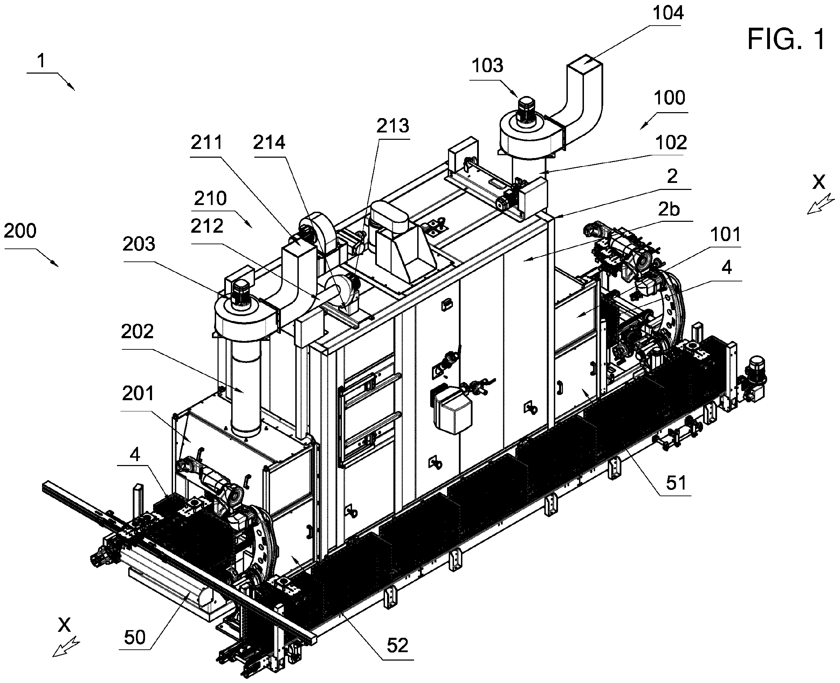

- Figure 1 shows an isometric overall view of the apparatus;

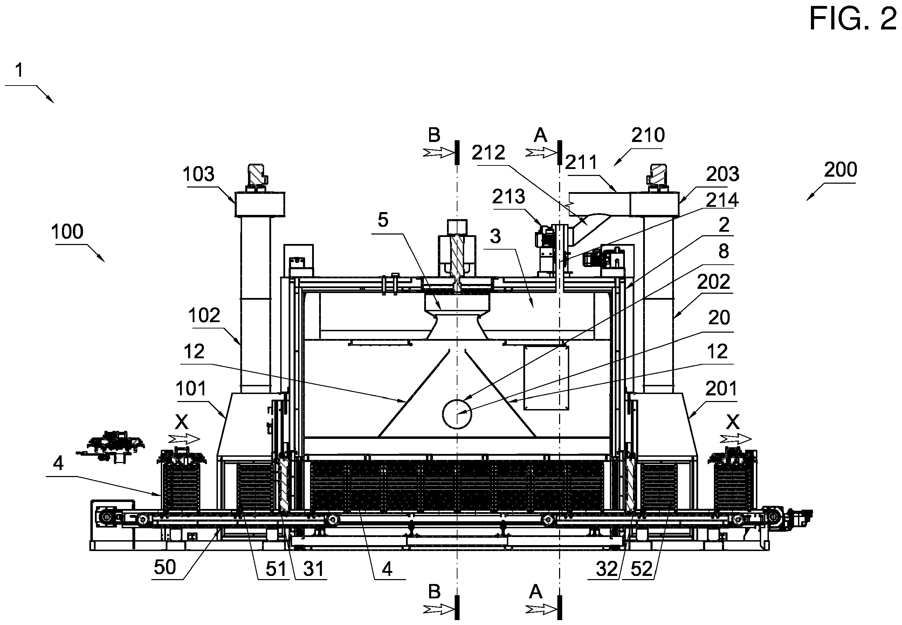

- Figure 2 shows a longitudinal vertical section of the apparatus;

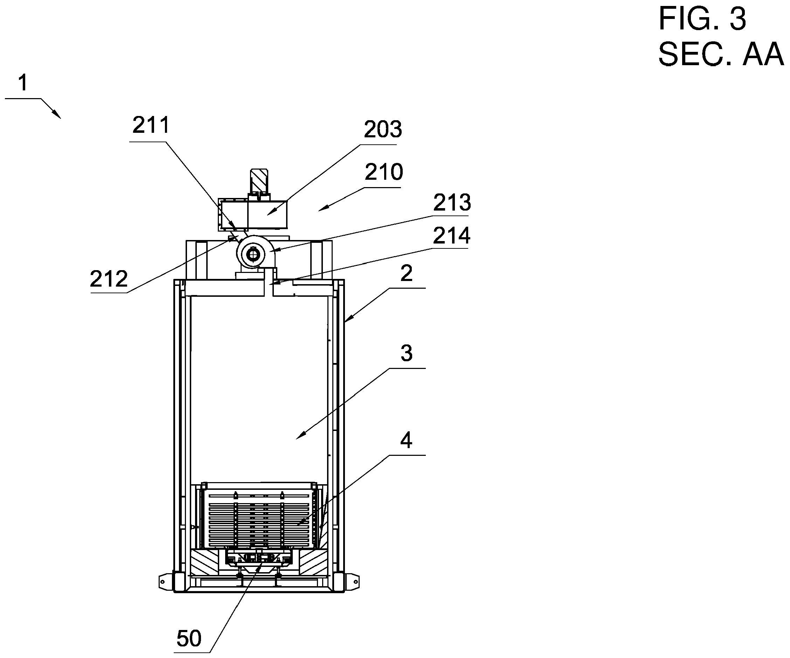

- Figure 3 shows a transverse vertical section AA of the apparatus;

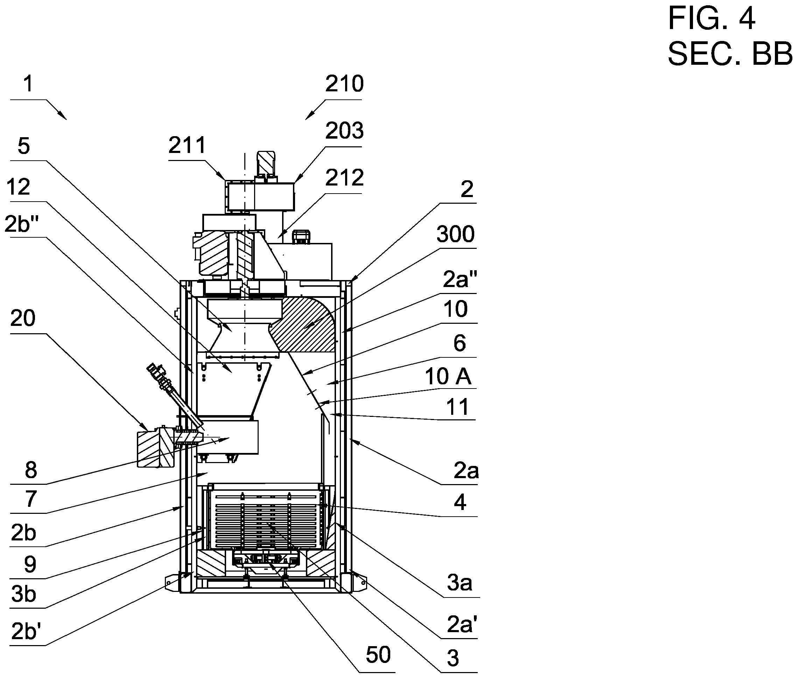

- Figure 4 shows a transverse vertical section BB of the apparatus;

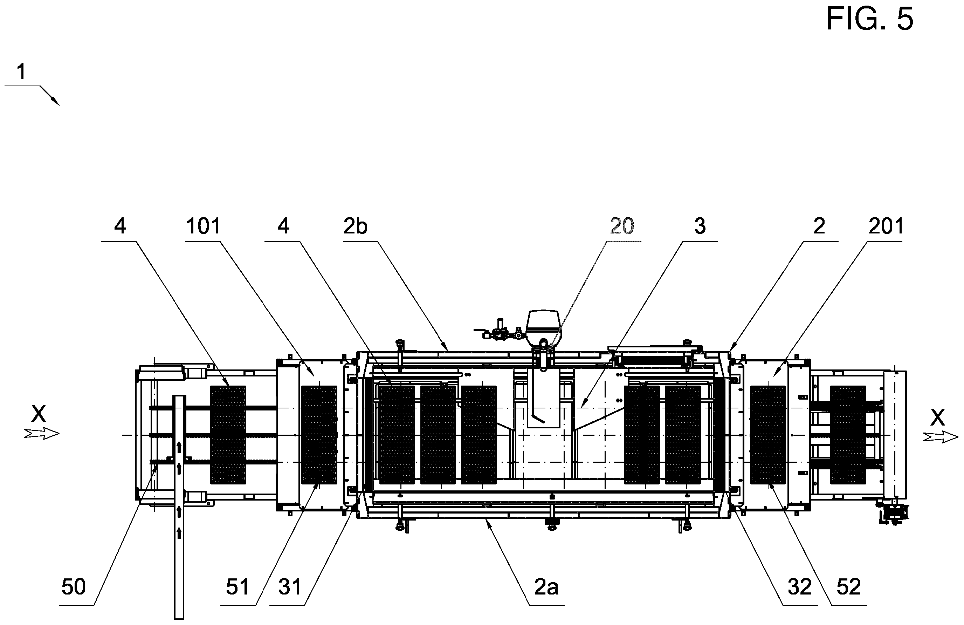

- Figure 5 shows a horizontal section of the apparatus.

The following detailed description refers to the accompanying drawings, which form part of it. In the drawings, similar reference numbers typically identify similar components unless the context indicates otherwise.

The illustrative embodiments described in the detailed description and drawings are not intended to be limiting.

Other embodiments may be used, and other modifications may be made without departing from the spirit or scope of the subject matter presented here.

The aspects of the present description, as generally described and illustrated in the figures, can be arranged, substituted, combined, and designed in a wide variety of different configurations, all of which are explicitly contemplated and form part of this description.

Referring to the cited figures, an apparatus for the heat treatment of articles according to the invention is shown overall with the reference number 1.

The apparatus 1 for the heat treatment of articles comprises a longitudinal casing 2, a convection tunnel furnace 3 positioned longitudinally within the casing 2, and a plurality of stackable trays 4 where the articles can be housed.

Typically, the articles undergoing heat treatment include friction materials, typically brake pads. In the convection tunnel furnace 3, a circuit for producing and forcibly circulating hot air provides heat treatment of the articles.

The apparatus 1 comprises a conveyor 50 configured to transport at least one row of stacks of stackable trays 4 through the furnace 3 along an X-axis, typically with step-by-step advancement. The conveyor 50 includes a first thermal stabilization chamber 51 for the stacks of trays 4 with the articles to be treated, communicating with an entrance door 31, and a second thermal stabilization chamber 52 for the stacks of trays 4 with the treated articles, communicating with an exit door 32 from the furnace 3.

At the exit door 32, means for forced air suction 200 are provided, configured to draw air from the second thermal stabilization chamber 52 through the plurality of stackable trays 4 housing the heat-treated articles in the furnace 3.

Typically, the means for forced air suction 200 comprise at least one hood 201 from the second thermal stabilization chamber 52, at least one first centrifugal fan 203, and at least one first suction duct 202 connecting the hood 201 to the suction of the first centrifugal fan 203, and a first delivery duct 211 exiting the first centrifugal fan 203 and connected to the general exhaust systems, not shown in the figures.

Appropriately and advantageously, the forced ambient air flow drawn through the stackable trays 4 absorbs heat from the articles housed in the second thermal stabilization chamber 52 at the exit of the heat treatment received inside the furnace 3, uniformly lowering their temperature. Appropriately, advantageously, and innovatively, the apparatus 1 for the heat treatment of articles according to the invention includes means for recovery and introduction 210 into the furnace 3 the air drawn and heated by the heat from the articles in forced cooling below the hood 201. Typically, the means for recovery and introduction 210 comprise at least one second delivery duct 212 connecting the first delivery duct 211 of the first centrifugal fan 203 to a compensation fan 213, appropriately interposed and connected to the second delivery duct 212 and the top of the furnace 3 through the delivery fitting 214.

Advantageously and innovatively, the second delivery duct 212 and the compensation fan 213 of the means for recovery and introduction 210 are sized and activated by the regulation and control means of the furnace 3, not shown in the figures, to maintain the furnace 3 in overpressure during operation, without the need for coordination with the first centrifugal fan 203.

The independent controlled activation of the compensation fan 213 "draws" the heated air from the first delivery duct 211, in the flow rate deemed appropriate by the regulation and control means to maintain the furnace 3 in overpressure, through the second delivery duct 211, and introduces it through the delivery fitting 214 at the top of the furnace 3.

It is known that from the sequential openings for the step-by-step movement of the conveyor 50 at the entrance door 31 and the exit door 32 from the furnace 3, as well as from the same traditional non-airtight construction of the furnace 3, cold ambient air could filter into the furnace 3 in case of depression, compromising the heating profiles and homogeneous heat treatment of the articles. The recovery of thermal energy derived from the forced cooling of the articles at the exit of the furnace 3 in the second thermal stabilization chamber 52 and the forced introduction of the thus-heated airflow by the means for recovery and introduction 210 improves the thermal efficiency of the furnace 3 with positive effects on energy consumption, and achieves a controlled - albeit slight - overpressure inside the furnace 3 that eliminates possible filtration of cold ambient air inside the furnace, which could compromise the heat treatment profiles of the individual articles In one embodiment, the apparatus 1 also comprises means for forced air suction 100 at the first thermal stabilization chamber 51, configured to draw ambient air through the plurality of stackable trays 4.

Typically, the means for forced air suction 100 include at least one hood 101 for collecting air placed above the plurality of stackable trays 4 stationed in the first thermal stabilization chamber 51, at least one second centrifugal fan 103, and at least one second suction duct 102 connecting the hood 101 to the suction of the second centrifugal fan 103.

The air drawn by the second centrifugal fan 103 through the second suction duct 102 is then sent to the delivery duct 104 connected to the general exhaust systems, not shown in the figures.

Appropriately, the ambient air flow forced through the stackable trays 4 equalizes the temperature of the articles housed therein before their entry into the furnace 3, ensuring for all individual articles, regardless of upstream production processes or different handling and storage conditions, compliance with the programmed parameters for the subsequent thermal cycle inside the furnace 3.

In a preferred embodiment, the casing 2 has a first longitudinal flank 2a and a second longitudinal flank 2b.

The furnace 3 has a first longitudinal flank 3a and a second longitudinal flank 3b, and the homologous flanks of the casing 2 and the furnace 3 face each other.

Typically, each longitudinal flank of the casing 2a, 2b has a lower portion 2a', 2b' directly facing the homologous flank 3a, 3b of the furnace 3 and an upper portion 2a", 2b" extending vertically above the homologous flank 3a, 3b.

In the path of the forced hot air circulation circuit in the furnace 3, the first longitudinal flank 3a is provided with hot air inlet openings, and the second longitudinal flank 3b is provided with hot air outlet openings.

The forced hot air circulation circuit includes a heat generator 20 for heating the air, typically but not limited to a horizontal flame gas burner as shown in the figures, or an electric resistance system, and a fan 5 positioned at the top of the casing 2 above the heat generator 20.

A descending channelling 6 of hot air from the outlet of the fan 5 is provided at the first flank 3a of the furnace 3, while an ascending channelling 7 of hot air from the second longitudinal flank 3b of the furnace 3 to the inlet of the fan 5.

The ascending channelling 7 includes a gap 9 defined by the lower portion 2b' of the second flank 2b of the casing 2 and the homologous flank 3b of the furnace 3.

Advantageously, the ascending channelling 7 includes a heating chamber 8 within which the heat generator 20 is positioned.

The heating chamber 8 is delimited by the upper portion 2b" of the second flank 2b of the casing 2.

The heat generator 20 projects from this upper portion 2b" of the second flank 2b of the casing 2. The descending channelling 6 includes a wall 10 of the heating chamber 8 that extends upward from the first flank 3a of the furnace 3 and defines a gap 11 with the first flank 2a of the casing 2. Advantageously and innovatively, the wall 10 includes an adjustable element 10A, in particular an appendix that protrudes for an adjustable stretch from the wall 10, delimiting and defining the passage section of the gap 11 of the descending channelling 6.

The fan 5 is a centrifugal fan with vertical axial inlet and horizontal outlet, positioned at the top of the casing 2, above the heating chamber 8, centrally with respect to the longitudinal development of the furnace 3, and offset towards the second flank 3b of the furnace 3 relative to the transverse development of the furnace 3.

Appropriately, the top part of the casing 2 includes a plurality of deflector fins 300 to guide the hot air flow from the outlet of the fan 5 to the descending channelling 6.

The deflector fins 300 define divergent guide channels for the hot air flow from the outlet of the fan 5 to the descending channelling 6.

The deflector fins 300 preferably have a flat configuration.

Advantageously, the ascending channelling 7 includes deflectors 12 that direct the hot air flow towards the inlet of the fan 5.

Advantageously, according to the present invention, at least two deflectors 12 are included, positioned with the heat generator 20 between them.

The deflectors 12 surmount the gap 9 between the lower portion 2b' of the second flank 2b of the casing 2 and the homologous flank 3b of the furnace 3.

The deflectors 12 are confined in a region of the heating chamber 8 adjacent to the second flank 2b of the casing 2, taper from top to bottom, and converge with opposite inclinations towards the inlet of the fan 5.

The operation of an apparatus for the heat treatment of articles according to the invention is evident from the described and illustrated content and is substantially as follows.

The fan 5 positioned at the top of the casing 2 draws air from the heating chamber 8 located below. The hot air outlet from the fan 5 is appropriately directed by the plurality of deflector fins 300 into the descending channelling 6 in the gap 11 defined by the wall 10 and the first flank 2a of the casing 2, continuing with a lower section defined by the first longitudinal flank 3a of the furnace 3 and the first flank 2a of the casing 2.

The adjustment of the adjustable element 10A of the wall 10 advantageously allows for control of the hot air flow in the gap 11.

Advantageously, the first longitudinal flank 3a is equipped with suitable hot air inlet openings into the furnace 3 towards the plurality of stacks of stackable trays 4 where the articles in process are housed.

The hot air passes through the trays, touching the articles, transferring the programmed amounts of heat, and reaches the second longitudinal flank 3b, which is equipped with hot air outlet openings from the furnace 3 towards the ascending channelling 7.

Advantageously and appropriately, according to the present invention, the ascending channelling 7 and inside the heating chamber 8 are provided at least two deflectors 12 that direct the air heated by the heat generator 20 towards the inlet of the fan 5 positioned above the heating chamber 8. The deflectors 12 advantageously contribute to the acceleration of the heated air towards the inlet of the fan 5 and the homogenization of the temperature of the heated fluid mass upstream of the outlet of the fan 5 towards the descending channelling 6.

The forced air circuit, in the ascending section, is also extremely linear and free of bends or tortuosities that could, if present, lengthen the air path between the furnace exit and the fan inlet, in addition to increasing pressure losses with negative effects on energy consumption.

It has been practically found that an apparatus for the heat treatment of articles according to the invention is particularly advantageous in ensuring better energy efficiency of the furnace with the forced circulation of heated air recovered from the forced cooling of treated articles.

An additional advantage of an apparatus for the heat treatment of articles according to the invention is obtaining an overpressure inside the furnace to ensure a homogeneous temperature distribution in the heating fluid and thus the heat treatment of the articles in process.

An apparatus for the heat treatment of articles conceived as described is susceptible to numerous modifications and variations, all falling within the scope of the inventive concept, as defined by the claims; furthermore, all details can be replaced with technically equivalent elements.

In practice, the materials used, as well as the dimensions, can be any depending on the needs and the state of the art.

## Claims

1. Apparatus (1) for the heat treatment of articles, comprising a longitudinal casing (2), a convection tunnel furnace (3) positioned longitudinally within the casing (2) comprising a circuit for the production and forced circulation of hot air through said furnace (3), a plurality of stackable trays (4) where said articles can be housed, a conveyor (50) configured to transport at least one row of stacks of said stackable trays (4) through said furnace (3), a first thermal stabilization chamber (51) for said stacks of trays (4) with the articles to be treated communicating with an entrance door (31) of said furnace (3) and a second thermal stabilization chamber (52) for said stacks of trays (4) with the treated articles communicating with an exit door (32) of said furnace (3), **characterized by** comprising means for forced air suction (200) at least from said second thermal stabilization chamber (52) and means for recovery and introduction (210) of said suctioned air inside said furnace (3).

2. Apparatus (1) for the heat treatment of articles according to claim 1, **characterized in that** said means for forced air suction (200) comprise at least one hood (201) of said second thermal stabilization chamber (52), at least one first centrifugal fan (203), and a first suction duct (202) connecting said hood (201) of said second thermal stabilization chamber (52) to the suction of said first centrifugal fan (203).

3. Apparatus (1) for the heat treatment of articles according to the preceding claim, **characterized in that** said means for recovery and introduction (210) of the suctioned air inside said furnace (3) comprise at least one first delivery duct (211) exiting from said first centrifugal fan (203) and at least one second delivery duct (212) connecting said first delivery duct (211) to a compensation fan (213), said compensation fan (213) being interposed and connected with said second delivery duct (212) and the top of said furnace (3) through a delivery fitting (214).

4. Apparatus (1) for the heat treatment of articles according to the preceding claim, **characterized in that** said second delivery duct (212) and said compensation fan (213) are sized to be activated by control and regulation means of said furnace (3) to maintain said furnace (3) in overpressure during operation.

5. Apparatus (1) for the heat treatment of articles according to the preceding claim, **characterized in that** said control and regulation means of said furnace (3) independently activate said compensation fan (213) without the need for coordination with said first centrifugal fan (203).

6. Apparatus (1) for the heat treatment of articles according to any preceding claim, **characterized by** comprising means for forced air suction (100) configured for suctioning air also from said first thermal stabilization chamber (51).

7. Apparatus (1) for the heat treatment of articles according to the preceding claim, **characterized in that** said means for forced air suction (100) comprise a hood (101) of said first thermal stabilization chamber (51), a second centrifugal fan (103), and a second suction duct (102) connecting said hood (101) of said first thermal stabilization chamber (51) to the suction of said second centrifugal fan (103).

8. Apparatus (1) for the heat treatment of articles according to any preceding claim, **characterized in that** said conveyor (50) is configured to transport at least one row of stacks of said stackable trays (4) through said furnace (3) with step-by-step advancement.

9. Apparatus (1) for the heat treatment of articles according to any preceding claim, **characterized in that** said articles are brake pads.

10. Apparatus (1) for the heat treatment of articles according to any preceding claim, **characterized in that** said casing (2) has a first longitudinal flank (2a) and a second longitudinal flank (2b); wherein said furnace (3) has a first longitudinal flank (3a) provided with inlet openings for hot air and a second longitudinal flank (3b) provided with outlet openings for hot air; wherein corresponding flanks of the casing and the furnace face each other; wherein said first longitudinal flank (2a) and said second longitudinal flank (2b) of said casing (2) have a lower portion respectively (2a', 2b') facing said corresponding first longitudinal flank (3a) and said corresponding second longitudinal flank (3b) of said furnace (3), and an upper portion respectively (2a", 2b") extending vertically to an upper level of said first and said second longitudinal flanks (3a, 3b) of said furnace (3); wherein said circuit of forced circulation of hot air comprises at least one heat generator (20), at least one fan (5) positioned in the upper part of said casing (2) above said heat generator (20), a descending channelling (6) of hot air from the outlet of said fan (5) to said first longitudinal flank (3a) of said furnace (3), and an ascending channelling (7) of hot air from said second longitudinal flank (3b) of said furnace (3) to the inlet of said fan (5); wherein said ascending channelling (7) comprises an heating chamber (8) overlying above said furnace (3); wherein said heat generator (20) is positioned inside said heating chamber (8); wherein said heating chamber (8) is delimited by said upper portion (2b") of said second longitudinal flank (2b) of said casing (2), and wherein said heat generator (20) protrudes from said upper portion (2b") of said second longitudinal flank (2b) of said casing (2).

11. Apparatus (1) for the heat treatment of articles according to the preceding claim, **characterized in that** said descending channelling (6) comprises a wall (10) of said heating chamber (8) extending upward from said first longitudinal flank (3a) of said furnace (3) and delimiting a gap (11) with said first longitudinal flank (2a) of said casing (2).

12. Apparatus (1) for the heat treatment of articles according to the preceding claim, **characterized in that** said wall (10) comprises an adjustable element (10A) delimiting the passage section of said gap (11) of said descending channelling (6).

13. Apparatus (1) for the heat treatment of articles according to any preceding claim from 10 to 12, **characterized in that** said heat generator (20) is a flame gas burner or an electric resistance system.

14. Apparatus (1) for the heat treatment of articles according to any preceding claim from 10 to 13, **characterized in that** said upper part of said casing (2) comprises a plurality of deflector fins (300) guiding the flow of hot air from the outlet of said fan (5) to said descending channelling (6).
